(19) Europäisches Patentamt
European Patent Office
Office européen des brevets

(11) EP 4 557 408 A1

(12) **EUROPEAN PATENT APPLICATION**
published in accordance with Art. 153(4) EPC

(43) Date of publication:
**21.05.2025 Bulletin 2025/21**

(21) Application number: **23880265.6**

(22) Date of filing: **19.10.2023**

(51) International Patent Classification (IPC):
***H01M 4/66*** *(2006.01)* ***H01M 4/13*** *(2010.01)*
***C08L 65/00*** *(2006.01)* ***C08G 61/12*** *(2006.01)*
***H01M 10/052*** *(2010.01)*

(52) Cooperative Patent Classification (CPC):
**C08G 61/12; C08L 65/00; H01M 4/13; H01M 4/66; H01M 10/052;** Y02E 60/10

(86) International application number:
**PCT/KR2023/016283**

(87) International publication number:
**WO 2024/085690 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.10.2022 KR 20220135124**

(71) Applicants:
- **LG Chem, Ltd.**
  **Yeongdeungpo-gu**
  **Seoul 07336 (KR)**
- **LG Energy Solution, Ltd.**
  **Seoul 07335 (KR)**

(72) Inventors:
- **KANG, Joon Koo**
  **Daejeon 34122 (KR)**
- **KWON, Soon Ho**
  **Daejeon 34122 (KR)**
- **PARK, Eun Kyoung**
  **Daejeon 34122 (KR)**
- **SONG, In Taek**
  **Daejeon 34122 (KR)**
- **KOH, Jong Kwan**
  **Daejeon 34122 (KR)**
- **KIM, Min Gyu**
  **Daejeon 34122 (KR)**
- **CHO, Woo Hyung**
  **Daejeon 34122 (KR)**
- **KIM, Ki Hwan**
  **Daejeon 34122 (KR)**
- **CHOI, Hyun Ju**
  **Daejeon 34122 (KR)**
- **YANG, Hee Myeong**
  **Daejeon 34122 (KR)**
- **PARK, Sung Bin**
  **Daejeon 34122 (KR)**

(74) Representative: **Plasseraud IP**
**104 Rue de Richelieu**
**CS92104**
**75080 Paris Cedex 02 (FR)**

# (54) CURRENT COLLECTOR FOR ELECTRODE

(57) The present specification discloses an electrode current collector, and a use thereof. The electrode current collector can exhibit excellent electrical characteristics, including low resistance, in a normal state in a secondary battery or the like, and can ensure stability through an increase in resistance in an abnormal state. The present specification also discloses a use of the electrode current collector.

[Figure 1]

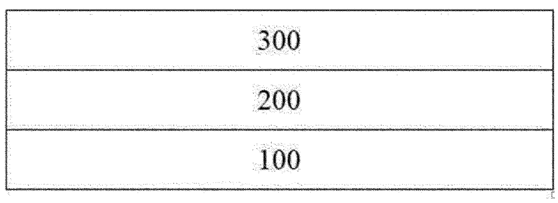


EP 4 557 408 A1

## Description

## Technical Field

Cross-reference with related applications

This application claims the benefit of priority based on Korean Patent Application No. 10-2022-0135124 dated October 19, 2022, the disclosure of which is incorporated herein by reference in its entirety.

Technical field

The present specification discloses anelectrode current collector and a use thereof.

## Background Art

An energy storage technology has expanded application areas to mobile phones, tablet and notebook PCs, or electric vehicles, and the like.

As the data processing speed of mobile devices such as mobile phones or tablets increases and their used hours also increase, the development of secondary batteries with high energy density and operating potential, long cycle life, and low self-discharge rate is in progress.

As major developed countries suppress production of cars driven by internal combustion engines to alleviate global warming and air pollution, major automobile manufacturers also develop various electric vehicles, and thus the importance of secondary batteries having high energy density, high discharge voltage, and output stability increases as driving sources thereof.

However, according to the above trend, the occurrence frequency of ignition or explosion accidents due to overcharging, high-temperature exposure or outer shocks, and the like in devices or automobiles using secondary batteries as an energy source also increases.

As a main cause of such accidents, a short phenomenon, in which a positive electrode and a negative electrode inside an electrode assembly come into direct contact with each other mainly due to external stimuli, is known. When the secondary battery is overcharged or exposed to high temperatures or external stimuli, the short phenomenon can occur by the separator shrinkage due to the internal temperature increase of the secondary battery, or the internal structure destruction of the secondary battery due to outer shocks, and the like.

When the short phenomenon occurs, migration of lithium ions and electrons is concentrated through the region where the positive electrode and the negative electrode are in direct contact with each other, so that internal heat generation can be promoted. Accordingly, it is known that as gas or the like is generated inside the battery, the volume expands, and the risk of ignition increases.

## Disclosure

## Technical Problem

The present specification discloses an electrode current collector and a use thereof. The present specification is intended to disclose an electrode current collector capable of exhibiting excellent electrical characteristics such as low resistance in a normal state without affecting performance and operation of a secondary battery, and securing stability in an abnormal state. The present specification is also intended to disclose a use of the electrode current collector.

## Technical Solution

In this specification, the term room temperature may mean a natural temperature without heating or cooling, and the room temperature may be, for example, any one temperature in a range of 10°C to 30°C, or a temperature of about 23°C, or about 25°C, or about 27°C or so.Among the physical properties mentioned in this specification, when the measurement temperature affects the physical property, the relevant physical propertyis a physical property measured at room temperature, unless otherwise specified. The unit of temperature in this specification is Celsius (°C), unless otherwise specified.

In this specification, the term normal pressure may mean a natural pressure without pressurization or depressurization, and the normal pressure may usually mean a pressure of about 730 mmHg to 790 mmHg or so. Among the physical properties mentioned in this specification, when the measurement pressure affects the physical property, the relevantphysical property is a physical property measured at normal pressure, unless otherwise specified.

Among the physical properties mentioned in this specification, when the measurement humidity affects the result, the relevant physical property is a physical property measured at humidity under standard conditions, unless otherwise specified.

The humidity under standard conditionsmeans any relative humidity in a range of 40% to 60% in relative humidity, for example, relative humidity of 55%, or 60% or so.

In this specification, the term normal state means a normal operating state of a secondary battery (e.g., a normal charging or discharging state of a secondary battery), or a storage state thereof.

In this specification, the term abnormal state means a dangerous state in which abnormal charge flow, abnormal heating, or explosion, and the like occurs due to an external impact and/or a short circuit phenomenon, and the like, or in which a probability of occurrence of such an abnormal state is increased.

The present specification discloses an electrode current collector.

The electrode current collector may comprise a current collector body and a polymer layer formed on the body. The electrode current collector may be used for formation of an electrode. For example, an electrode formed using the electrode current collector may comprise the electrode current collector and an active material layer formed on the polymer layer of the current collector. Figure 1 is a diagram showing an electrode in which an active material layer (300) is formed on the polymer layer (200) of theelectrode current collector including the current collector body (100) and the polymer layer (200).

As in the drawings, in the electrode current collector or electrode, the current collector body (100) and the polymer layer (200), and the polymer layer (200) and the active material layer (300) may be in contact with each other, and other elements may also exist therebetween. Also, in the drawing, the active material layer (300) is shown on only one side of the current collector body (100), but the active material layer (300) may also be present on both sides of the current collector body (100). In this case, the polymer layer (200) may also be present in two layers between each of the active material layers (300) present on both sides of the current collector body (100), and the current collector body (100), and may also be present in one layer between any one of the active material layers (300)present on both sides, and the current collector body (100).

The electrode formed by the electrode current collector may be a negative electrode(anode) or a positive electrode (cathode) applied to a secondary battery.

The polymer layer may be designed to exhibit a so-called PTC (positive temperature coefficient) effect. Therefore, the polymer layer may variably control movement of charges in the current collector or electrode depending on the temperature.

By applying the polymer layer, the electrode can exhibit excellent electrical characteristics including low resistance in the normal state, and can secure stability through an increase in resistance in the abnormal state.

In order that the polymer layer is applied to the electrode to exhibit the effect, the tendency of the PTC effect exhibited by the polymer layer must be controlled. The PTC effect is an effect in which resistance increases in proportion to the temperature. For example, if an increase in the resistance of the polymer layer occurs in the normal state, stable operation of a secondary battery or the like becomes impossible.

The tendency of the PTC effect of the appropriately designed polymer layer can enable stable operation of the secondary battery in the normal state, suppress an abnormal temperature increase in the abnormal state, and reduce the rate of temperature increase as well.

The polymer layer disclosed in the present specification is one in which the composition of the applied conductive copolymer and the method of forming the polymer layer are controlled, whereby it can exhibit the desired PTC effect. Such a polymer layer can prevent a so-called thermal runaway phenomenon (TR (thermal runaway) or TP (thermal propagation) phenomenon) by suppressing abnormal overcurrent through the resistance increase in the abnormal state, and can reduce the risk of heat generation and explosion by preventing volume expansion due to internal gas generation.

The polymer layer disclosed in the present specification can maintain stable oxidation potential and electrical characteristics in a normal state by controlling the temperature at which the PTC effect occurs.

In one example, the upper limit of DC resistance of the polymer layer, electrode current collector or electrode at 25°Cmay be$10^4$Ω·cm, 9500 Ω·cm, 9000 Ω·cm, 8500 Ω·cm, 8000 Ω·cm, 7500 Ω·cm, 7000 Ω·cm, 6500 Ω·cm, 6000 Ω·cm, 5500 Ω·cm, 5000 Ω·cm, 4500 Ω·cm, 4000 Ω·cm, 3500 Ω·cm, 3000 Ω·cm, 2500 Ω·cm, 2000 Ω·cm, 1500 Ω·cm, 1000 Ω·cm, 950 Ω·cm, 900 Ω·cm, 850 Ω·cm, 800 Ω·cm, 750 Ω·cm, 700 Ω·cm, 650 Ω·cm, 600 Ω·cm, 550 Ω·cm, 500 Ω·cm, 450 Ω·cm, or 400 Ω·cmor so, and the lower limit thereof may be10 Ω·cm, 50 Ω·cm, 100 Ω·cm, 150 Ω·cm, 200 Ω·cm, 250 Ω·cm, 300 Ω·cm, 350 Ω·cm, 400 Ω·cm, 450 Ω·cm, or 500 Ω·cmor so. The DC resistance may be within a range of less than or equal to, or less than any one of the above-described upper limits; or may also have a range between less than or equal to, or less than any one of the above-described upper limits and more than or equal to, or more than any one of the above-described lower limits. The DC resistance is measured in the manner described in "5. DC resistance measurement method" of Examples in this specification.

The upper limit of AC impedance resistance of the polymer layer, electrode current collector or electrode may be $10^3$ Ω, 950 Ω, 900 Ω, 850 Ω, 800 Ω, 750 Ω, 700 Ω, 650 Ω, 600 Ω, 550 Ω, 500 Ω, 450 Ω, 400 Ω, 350 Ω, 300 Ω, 250 Ω, 200 Ω,

150 Ω, 100 Ω, 95 Ω, 90 Ω, 85 Ω, 80 Ω, 75 Ω, 70 Ω, 65 Ω, 60 Ω, 55 Ω, or 50 Ω or so, and the lower limit thereof may be 10 Ω, 15 Ω, 20 Ω, 25 Ω, 30 Ω, 35 Ω, 40 Ω, 450 Ω, 50 Ω, 55 Ω, 60 Ω, 65 Ω, or 70 Ω or so. The AC impedance resistance may be within a range of less than or equal to, or less than any one of the above-described upper limits; or may also have a range between less than or equal to, or less than any one of the above-described upper limits and more than or equal to, or more than any one of the above-described lower limits. The AC impedance resistance is measured in the manner described in "6. Interface resistance (AC impedance resistance)" of Examples in this specification.

As the polymer layer, electrode current collector, or electrode exhibits the DC resistance and/or AC impedance resistance, the secondary battery or electrode assembly to which the polymer layer or the like is applied may be stably operated or stored in a normal state.

The electrode current collector and electrode to which the polymer layer is applied can exhibit the PTC effect in which the resistance increases and secure stabilityin an abnormal state.

The polymer layer, electrode current collector, or electrode may exhibit a characteristic thatΔR1 of Equation 1 below is within a predetermined range.

[Equation 1]

$$\Delta R1 = \mathrm{Max}\{(R_{n+5}/R_n)/5\}$$

In Equation 1, $R_n$ is the DC resistance at any temperature n°C within a range of 25°C to 135°C, and $R_{n+5}$ is the DC resistance at a temperature((n+5)°C) 5°C higher than the temperature n°C,and Max{$(R_{n+5}/R_y)/5$} is the maximum value among the $(R_{n+5}/R_n)/5$ values confirmed within the temperature range of 25°C to 135°C.

ΔR1 of Equation 1 is measured for a coin cell to which the polymer layer is applied, and the specific method thereof is explained in "7. Measurement of maximum resistance change rate (DC resistance)" of Examples. In the method for identifying ΔR1, an initial temperature is 25°C and a final temperature is 135°C. The $R_{n+5}$ and $R_n$ are identified by measuring the DC resistance at each temperature while increasing the temperature by 5°C from the initial temperature of 25°C. For example, when n is 90, $R_{95}/R_{90}$ is the ratio of the DC resistance at 95°C to the DC resistance at 90°C. For example, the matter that ΔR1 exhibits100 Ω·cm/°C or more at any temperature within the temperature range of 25°C to 135°C means that the resistance of the polymer layer, electrode current collector, or electrode increases relatively rapidly at any temperature within the temperature range.

The lower limit of the ΔR1 may be 40, 45, 50, 55, 60, 65, 70, 75, 80, 90, 100, 150, 200, 250, 300, 350, or 400 or so, and the upper limit thereof may be 1,000, 950, 900, 850, 800, 750, 700, 650, 600, 550, 500, 450, 400, 350, 300, 250, 200, 150, or 100 or so. The unit of the ΔR1 is Ω·cm/°C. The ΔR1 may be within a range of more than or equal to, or more than any one of the above-described lower limits; or may also have a range between less than or equal to, or less than any one of the above-described upper limits and more than or equal to, or more than any one of the above-described lower limits.

Through the characteristics, the electrode to which the polymer layer is applied can secure stability of a secondary battery, and the like, in an abnormal state.

The lower limit of the temperature at which the ΔR1 is confirmed, that is, the temperature at $R_n$, may be 81°C, 82°C, 83°C, 84°C, 85°C, 86°C, 87°C, 88°C, 89°C, 90°C, 91°C, 92°C, 93°C, 94°C, or 95°C or so, and the upper limit thereof may be 200°C, 190°C, 180°C, 170°C, 160°C, 150°C, 140°C, 130°C, 120°C, 110°C, 100°C, or 90°C or so. The temperature may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. The temperature is adjusted to a temperature at which an abnormal state occurs or there is a risk that an abnormal state occurs. When the polymer layer exhibiting the characteristics is applied, the electrode, electrode assembly, or secondary battery can secure stability under abnormal conditions while maintaining stable performance even in the case where storage in a normal state is performed at a relatively high temperature and in charging and discharging states at high temperatures.

The polymer layer, electrode current collector or electrode can exhibit characteristicsthatΔR2 of Equation 2 below is within a predetermined range.

[Equation 2]

$$\Delta R2 = \mathrm{Max}\{(R_{z+5}/R_z)/5\}$$

In Equation 2, $R_z$ is the AC impedance resistance at any temperature n°C within a range of 25°C to 135°C, and $R_{z+5}$ is the AC impedance resistance at a temperature ((n+5)°C) 5°C higher than the temperature n°C, and Max {$(R_{z+5}/R_z)/5$} is the maximum value among the $(R_{z+5}/R_z)/5$ values confirmed within the temperature range of 25°C to

135°C.

ΔR2 of Equation 2 is measured for a coin cell to which the polymer layer is applied, and the specific method thereof is explained in "8. Measurement of maximum resistance change rate (AC impedance)" of Examples. In the method for identifying ΔR2, an initial temperature is 25°C and a final temperature is 135°C. The $R_{z+5}$ and $R_z$ are identified by measuring the AC impedance resistance at each temperature while increasing the temperature by 5°C from the initial temperature of 25°C. For example, when n is 90, $R_{95}/R_{90}$ is the ratio of the AC impedance resistance at 95°C to the AC impedance resistance at 90°C. For example, the matter that ΔR2 exhibits 10Ω/°C or more at any temperature within the temperature range of 25°C to 135°C means that the resistance of the polymer layer, electrode current collector, or electrode increases relatively rapidly at any temperature within the temperature range.

The lower limit of the ΔR2 may be 8, 10, 12, 14, 16, 18, 20, 22, 24, 26, 28, 30, 33, 34, 36, 38, 40, 42, or 44 or so, and the upper limit thereof may be 100, 95, 90, 85, 80, 75, 70, 65, 60, 55, 50, 45, 40, 35, 30, 25, 20, 18, 16, 14, 12, or 10 or so. The unit of the ΔR2 is Ω/°C. The ΔR2 may be less than or equal to, or less than any one of the above-described upper limits, ormay be more than or equal to, or more than any one of the above-described lower limits, or may also have a range between less than or equal to, or less than any one of the above-described upper limits and more than or equal to, or more than any one of the above-described lower limits.

Through the characteristics, the electrode to which the polymer layer is applied can secure stability of a secondary battery, and the like, in an abnormal state.

The lower limit of the temperature at which ΔR2 of the above range is confirmed, that is, the temperature at $R_z$, may be 80°C, 81°C, 82°C, 83°C, 84°C, 85°C, 86°C, 87°C, 88°C, 89°C, 90°C, 91°C, 92°C, 93°C, 94°C, or 95°C or so, and the upper limit thereof may be 200°C, 190°C, 180°C, 170°C, 160°C, 150°C, 140°C, 130°C, 120°C, 110°C, 100°C, or 90°C or so. The temperature may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. The temperature is adjusted to a temperature at which an abnormal state occurs or there is a risk that an abnormal state occurs. When the polymer layer exhibiting the characteristics is applied, the electrode, electrode assembly, or secondary battery can secure stability under abnormal conditions while maintaining stable performance even in the case where storage in a normal state is performed at a relatively high temperature and in charging and discharging states at high temperatures.

The polymer layer, electrode current collector, or electrode can exhibit characteristicsthat the absolute value of ΔR3 of Equation 3 below is within a predetermined range.

[Equation 3]

$$\Delta R3 = 100 \times (C_1\text{-}C_2)/C_1$$

In Equation 3, $C_1$ is the discharged capacity at room temperature (about 25°C), and $C_2$ is the discharged capacity after storage at 70°C for 60 hours, and the specific method of measuring the same is summarized in "9. Discharged capacity measurement" of Examples.

The upper limit of the absolute value of ΔR3 in Equation 3 may be 10%, 9.5%, 9%, 8.5%, 8%, 7.5%, 7%, 6.5%, 6%, 5.5%, 5%, 4.5%, 4%, 3.5%, 3%, 2.5%, 2%, 1.5%, or 1% or so, and the lower limit thereof may be 0%, 0.5%, or 1.5% or so. The range of the absolute value may be within a range of less than or equal to, or less than any one of the above-described upper limits; or may also have a range between less than or equal to, or less than any one of the above-described upper limits and more than or equal to, or more than any one of the above-described lower limits.By securing the characteristics, the performance of the current collector, electrode, or secondary battery to which the polymer layer is applied can be stably maintained even when the operation and storage of the current collector, and thelike are performed in a normal state, which is at a relatively high temperature.

The polymer layer, electrode current collector, or electrode can exhibit characteristics that the absolute value of ΔR4 of Equation 4 below is within a predetermined range.

[Equation 4]

$$\Delta R4 = 100 \times (C_1\text{-}C_3)/C_1$$

In Equation 4, $C_1$ is the discharged capacity at room temperature (about 25°C), and $C_3$ is the discharged capacity after storage at 130°C for 10 minutes. $C_1$ and $C_3$ of Equation 4 are the discharged capacities measured for the coin cell to which the electrode is applied, and the specific method of measuring this is summarized in "10. Discharged capacity measurement" of Examples.

The lower limit of the absolute value of ΔR4 in Equation 4 may be 15%, 20%, 22%, 24%, 26%, 28%, 30%, 32%, 34%, 36%, 38%, 40%, 42%, 44%, 46%, 48%, 50%, 52%, 54%, 56%, 58%, 60%, 62%, 64%, 66%, or 68% or so, and the upper limit thereof may be 200%, 180%, 160%, 140%, 120%, 100%, 95%, 90%, 85%, 80%, 75%, 70%, 65%, 60%, 50%, 40%, 30%, or 20% or so. The range of the absolute value may be within a range of more than or equal to, or more than any one of the above-described lower limits; or may also have a range between less than or equal to, or less than any one of the above-described upper limits and more than or equal to, or more than any one of the above-described lower limits.

Through the characteristics, the electrode to which the polymer layer is applied can secure stability of a secondary battery, and the like, in an abnormal state.

The above characteristics can be achieved through introduction of a polymer layer to be described below.

The current collector body is not particularly limited, and one commonly used as a current collector body for the positive electrode or negative electrode can be used.

Ifthe current collector body has conductivity without causing chemical changes in applied devices such as secondary batteries, the type, size, and shape thereof, and the like are not particularly limited. An example of a material that can be used as the current collector body may include copper, aluminum, stainless steel, nickel, titanium, or calcined carbon, and the like, or may be exemplified by a material, and the like in which the surface of copper, aluminum, or stainless steel is surface-treated with carbon, nickel, titanium, or silver, and the like. The current collector body may be in the form of a film, sheet, foil, net, porous body, foam, or nonwoven fabric, and the like, which comprises the above material. In some cases, a known surface treatment may also be performed on the surface of the current collector body to improve adhesive force to other layers such as a polymer layer or an active material layer.

Such a current collector body may typically have a thickness within a range of 3μm to 500μm, but is not limited thereto.

A layer that is usually applied may also be used as the active material layer used to form the electrode.

Typically, the active material layer comprises an electrode active material. The specific type of the electrode active material is not particularly limited, and materials to form a positive electrode or a negative electrode can usually be used.

For example, when the active material layer is a positive electrode active material layer, the electrode active material may include layered compounds such as lithium cobalt oxide ($LiCoO_2$) or lithium nickel oxide ($LiNiO_2$), or compounds substituted with one or more transition metals; lithium iron oxides such as $LiFe_3O_4$; lithium manganese oxides such as Formula $Li_{1+c1}Mn_{2-c1}O_4$ ($0 \leq c1 \leq 0.33$), $LiMnO_3$, $LiMn_2O_3$, or $LiMnO_2$; lithium copper oxides ($Li_2CuO_2$); vanadium oxides such as $LiV_3O_8$, $V_2O_5$, or $Cu_2V_2O_7$; Ni-site lithium nickel oxides represented by Formula $LiNi_{1-c2}M_{c2}O_2$ (where M is at least one selected from the group consisting of Co, Mn, Al, Cu, Fe, Mg, B and Ga, and $0.01 \leq c2 \leq 0.3$ is satisfied); lithium manganese composite oxides represented by Formula $LiMn_{2-c3}M_{c3}O_2$ (where M is at least one selected from the group consisting of Co, Ni, Fe, Cr, Zn, and Ta, and $0.01 \leq c3 \leq 0.1$ is satisfied) or $Li_2Mn_3MO_8$ (here, M is at least one selected from the group consisting of Fe, Co, Ni, Cu and Zn); lithium nickel cobalt manganese (NCM) composite oxides, lithium nickel cobalt manganese aluminum (NCMA) composite oxides, and $LiMn_2O_4$ in which a part of Li in the formula is substituted with alkaline earth metal ions, and the like, but is not limited thereto.

When the active material layer is a negative electrode active material layer, as the electrode active material, for example, a compound capable of reversible intercalation and deintercalation of lithium may be used. A specific example may include carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as $SiO_a$ ($0 < a < 2$), $SnO_2$, vanadium oxide, and lithium vanadium oxide; or a composite comprising the metallic compound and the carbonaceous materials such as a Si-C composite or a Sn-C composite, and the like, and any one or a mixture of two or more of the foregoing may be used.

A metal lithium thin film may also be used as the negative electrode active material, andas the carbon material, low crystalline carbon and high crystalline carbon, and the like may also be used. As the low crystalline carbon, soft carbon and hard carbon are representative, and as the high crystalline carbon, high-temperature baked carbons such as amorphous, plate-like, scale-like, spherical, or fibrous natural graphite or artificial graphite, Kish graphite, pyrolytic carbon, mesophase pitch based carbon fiber, mesocarbon microbeads, mesophase pitches, and petroleum and coal tar pitch derived cokes are representative.

The electrode active material may be included in the active material layer within a range of about 80 wt% to 99.5 wt%, or within a range of 88 wt% to 99 wt% relative to the total weight of the active material layer, but the ratio may be changed depending on the use or design of the electrode.

The active material layer may further comprise a binder. The binder serves to improve attachment between the active materials, and adhesive force on between the active material layer and the current collector body. An example of the binder is not particularly limited, and one or more may be selected from the group consisting of, for example, PVDF (poly(vinylidene fluoride), PVA (poly(vinyl alcohol)), SBR (styrene butadiene rubber), PEO (poly(ethylene oxide)), CMC (carboxyl methyl cellulose), cellulose acetate, cellulose acetate butylate, cellulose acetate propionate, cyanoethylpullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinylacetate, polyethylene-co-vinyl acetate, and polyarylate, and used.

In one example, the binder may be included in the active material layer within a range of 0.1 parts by weight to 10 parts by weight, or 0.5 parts by weight to 5 parts by weight relative to 100 parts by weight of the electrode active material, but is not limited thereto.

The active material layer may further comprise a conductive material, as needed. If the conductive material has conductivity without causing chemical changes in the secondary battery, it is not particularly limited, any known material can be used. For example, graphite such as natural graphite or artificial graphite; carbon black, such as carbon black, acetylene black, Ketjen black, channel black, furnace black, lamp black, or thermal black; conductive fibers such as carbon fibers or metal fibers; conductive tubes such as carbon nanotubes (CNTs); metal powders such as fluorocarbon, aluminum, or nickel powder; conductive whiskers such as zinc oxide or potassium titanate; conductive metal oxides such as titanium oxide; conductive materials such as polyphenylene derivatives, and the like may be used.

In one example, the conductive material may be included in the active material layer in an amount of 0.1 parts by weight to 20 parts by weight, or 0.3 parts by weight to 10 parts by weight relative to 100 parts by weight of the electrode active material, but is not limited thereto.

The active material layer may also further comprise any necessary known components in addition to the above-described componentsoptionally.

The polymer layer present on the current collector body may comprise a conductive polymer. As is known, the conductive polymer is a polymer exhibiting conductivity by a conjugated system and/or doping of a polymer chain, and the like.

As the conductive polymer, a polymer having a so-called PTC (Positive Temperature Coefficient) characteristic may be used, and by controlling the tendency of the PTC effect, and the oxidation potential, and the like of the polymer, it is possible to effectively form an electrode exhibiting the above-described characteristics.

The polymer layer may comprise only the conductive polymer, or may furthercomprise the conductive polymer and other necessary additives. In one example, the lower limit of the content of the conductive polymer in the polymer layer may be 50 wt%, 55 wt%, 60 wt%, 65 wt%, 70 wt%, 75 wt%, 80 wt%, 85 wt%, 90 wt%, or 95 wt% or so based on the total weight of the polymer layer, and the upper limit thereof may also be 100 wt%, 95 wt%, 90 wt%, or 85 wt% or so based on the total weight of the polymer layer. The range of the content may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The oxidation potential of the conductive polymer or polymer layer may be controlled according to the objective. The method of measuring the oxidation potential is summarized in Examples in this specification. The oxidation potential is measured based on lithium and lithium ions ($Li/Li^+$). The method of measuring the oxidation potential is summarized in "4. Oxidation potential measurement method" of Examples in this specification.

The lower limit of the oxidation potential may be 2V, 2.1V, 2.2V, 2.3V, 2.4V, 2.5V, 2.6V, 2.7V, 2.8V, 2.9V, 3V, 3.1V, 3.2V, 3.3V, 3.4V, 3.5V, 3.6V, or 3.7V or so, and the upper limit thereof may be 5V, 4.9V, 4.8V, 4.7V, 4.6V, 4.5V, 4.4V, 4.3V, 4.2V, 4.1V, 4.0V, 3.9V, 3.8V, 3.7V, 3.6V, or 3.5V or so. The oxidation potential may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. By using the conductive polymer having such an oxidation potential, it is possible to effectively form a polymer layer, and an electrode, having desired properties.

The conductive polymer may have a weight average molecular weight within a predetermined range. The lower limit of the weight average molecular weight in the conductive polymer may be 30,000 g/mol, 35,000 g/mol, 40,000 g/mol, 45,000 g/mol, 50,000 g/mol, 55,000 g/mol, 60,000 g/mol, 65,000 g/mol, 70,000 g/mol, 75,000 g/mol, 80,000 g/mol, 85,000 g/mol, 90,000 g/mol, 95,000 g/mol, 100,000 g/mol, 105,000 g/mol, 110,000 g/mol, 115,000 g/mol, 120,000 g/mol, 125,000 g/mol, 130,000 g/mol, or 135,000 g/mol or so, and the upper limit thereof may also be 1,000,000 g/mol, 950,000 g/mol, 900,000 g/mol, 850,000 g/mol, 800,000 g/mol, 750,000 g/mol, 700,000 g/mol, 650,000 g/mol, 600,000 g/mol, 550,000 g/mol, 500,000 g/mol, 450,000 g/mol, 400,000 g/mol, 350,000 g/mol, 300,000 g/mol, 250,000 g/mol, 200,000 g/mol, 150,000 g/mol, or 110,000 g/mol or so. The weight average molecular weight may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. By using the conductive polymer having such a weight average molecular weight, it is possible to effectively form a polymer layer, and an electrode, having desired properties.

The molecular weight distribution of the conductive polymer, that is, the ratio of the weight average molecular weight (Mw) to the number average molecular weight (Mn), may be within a predetermined range. The lower limit of the

molecular weight distribution may be 2, 2.5, 3, 3.5, 4, or 4.5 or so, and the upper limit thereof may be 8, 7.5, 7, 6.5, 6, 5.5, or 5 or so. The molecular weight distribution may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. By using the conductive polymer having such a molecular weight distribution, it is possible to effectively form a polymer layer, an electrode current collector, and an electrode, having desired properties.

The weight average molecular weight and molecular weight distribution can be measured according to the contents described in "2. GPC (Gel Permeation Chromatograph)" of Examples in this specification.

The conductive polymer may be a thiophene polymer. In this specification, the term polythiophene means a polymer containing thiophene monomer units in a certain level or more. By applying a thiophene polymer as the conductive polymer, it is possible to efficiently form a desired polymer layer.

The lower limit of the ratio of the thiophene unit in the thiophene polymer may be about 50 mol%, 55 mol%, 60 mol%, 65 mol%, 70 mol%, 75 mol%, 80 mol%, 85 mol%, or 90 mol% or so relative to the total polymerization units of the polymer, and the upper limit thereof may be 100 mol%, 95 mol%, or 90 mol% or so. The ratio of the thiophene unit may be within a range of more than or equal to, or more than any one of the above-described lower limits; or may also have a range between less than or equal to, or less than any one of the above-described upper limits and more than or equal to, or more than any one of the above-described lower limits.

In this specification, the term thiophene unit means a unit formed by polymerizing a thiophene-based monomer, and the thiophene-based monomer means a monomer containing a thiophene skeleton.

To exhibit appropriate characteristics, a conductive polymer including a thiophene unit having a long-chain hydrocarbon group (hereinafter, may be referred to as a first thiophene unit) and a thiophene unit having a short-chain hydrocarbon group (hereinafter, may be referred to as a second thiophene unit) may be used as the conductive polymer. Such a conductive polymer is a conductive copolymer.

In this specification, the term long-chain hydrocarbon functional group means a monovalent hydrocarbon group having a carbon number of a certain level or more, or a monovalent functional group including a monovalent hydrocarbon group having a carbon number of a certain level or more.

In this specification, the term short-chain hydrocarbon functional group means a monovalent hydrocarbon group having a carbon number of a certain level or less, or a monovalent functional group including a monovalent hydrocarbon group having a carbon number of a certain level or less.

The lower limit of the carbon number of the long-chain hydrocarbon group may be 10, 11, or 12 or so, and the upper limit thereof may be 20, 19, 18, 17, 16, 15, 14, 13, 12, 11, or 10 or so. The carbon number of the long-chain hydrocarbon group may be within a range of more than or equal to, or more than any one of the above-described lower limits; or may also have a range between less than or equal to, or less than any one of the above-described upper limits and more than or equal to, or more than any one of the above-described lower limits.

The lower limit of the carbon number of the short-chain hydrocarbon group may be 3, 4, 5, 6, 7, or 8 or so, and the upper limit thereof may be 9, 8, 7, or 6 or so. The carbon number of the short-chain hydrocarbon group may be within a range of less than or equal to, or less than any one of the above-described upper limits; or may also have a range between less than or equal to, or less than any one of the above-described upper limits and more than or equal to, or more than any one of the above-described lower limits.

The carbon number may be the total carbon number present in the long-chain and short-chain hydrocarbon functional groups, or the carbon number of a hydrocarbon chain with a linear structure included in the functional group. That is, the monovalent hydrocarbon group present in the long-chain and short-chain hydrocarbon functional groups may have a linear structure or a branched structure, and even in the case of the branched structure, the carbon number constituting the longest linear chain in the branched structure may be within the above range. For example, if the branched structure is a 2-ethylhexyl group, the carbon number constituting the longest chain is 6.

An example of the long-chain and short-chain hydrocarbon functional groups may be exemplified by one or more selected from the group consisting of an alkyl group, an alkenyl group, an alkynyl group, an alkoxy group, an alkylcarbonyl group, and an alkylcarbonyloxy group. In a suitable example, the long-chain and short-chain hydrocarbon functional groups may be alkyl groups and/or alkoxy groups.

The carbon number present in the alkyl group, the alkenyl group, the alkynyl group, the alkoxy group, the alkyl group of the alkylcarbonyl group, and the alkyl group of the alkylcarbonyloxy group may be in the range of the carbon number(i.e., the carbon number of the monovalent hydrocarbon group) present in the long-chain or short-chain hydrocarbon functional group.

For example, the alkyl group, the alkenyl group, the alkynyl group, the alkoxy group, the alkyl group of the alkylcarbonyl group and the alkyl group of the alkylcarbonyloxy group may have a linear or branched structure, and in the case of the branched chain, the carbon number constituting the longest linear chain in the relevant branched structure may be within the above range.

The alkyl group, alkenyl group, alkynyl group, alkoxy group, alkylcarbonyl group, or alkylcarbonyloxy group, which is the hydrocarbon functional group, may also be optionally substituted with one or more substituents.

In the conductive copolymer, the lower limit of the ratio of the total mole number of the first and second thiophene units based on the total polymerization units of the conductive copolymer may be 80 mol%, 82 mol%, 84 mol%, 86 mol%, or 88 mol% or so, and the upper limit thereof may be 99 mol%, 97 mol%, 95 mol%, 93 mol%, 91 mol%, or 90 mol% or so. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The lower limit of the ratio (M2/M1) of the mole number (M2) of the second thiophene unit to the mole number (M1) of the first thiophene unit in the conductive copolymer may be 0.01, 0.05, 0.1, 0.5, 1, 1.5, or 2 or so, and the upper limit thereof may be 100, 95, 90, 85, 80, 75, 70, 65, 60, 55, 50, 45, 40, 35, 30, 25, 20, 15, 10, 9, 8, 7, 6, 5, 4, 3, 2, 1, 0.8, 0.7, 0.6, or 0.55 or so. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

Under such a ratio, the conductive copolymer or the polymer layer exhibits an appropriate PTC (positive temperature coefficient) effect, and its surface characteristics are adjusted, whereby it is possible to ensure excellent adhesive force in an electrode or an electrode current collector.

The hydrocarbon group is a functional group capable of imparting appropriate mobility to the polymerization process of the conductive polymer or the conductive polymer itself. Such a functional group imparts appropriate mobility to a monomer mixture, and diffuses within the monomer mixture to enable polymerization to occur with excellent efficiency. Also, the conductive polymer having the functional group can enable a polymer layer to be formed stably and uniformly between the current collector body and the active material layer through appropriate mobility.

In addition, the hydrocarbon group may also be appropriately oriented in a drying or annealing process (heat treatment process) applied in the formation process of the polymer layer to impart suitable PTC effect and oxidation potential characteristics to the copolymer.

Upon application of a certain amount of heat energy, the hydrocarbon group vibrates due to the heat, and dedoping of anions bound to the copolymer are promoted by this vibration (thermal vibration), and accordingly, the resistance increase is induced. The temperature at which the thermal vibration occurs can be controlled by the length and/or amount of the hydrocarbon group. For example, under the same temperature, the thermal vibration of a relatively long chain is greater than that of a relatively short chain, whereby the long chain can induce a resistance increase effect at a relatively low temperature. Therefore, the desired PTC effect can be set through control of the length and/or ratio of the long-chain hydrocarbon group.

In one example, the first thiophene unit may be represented by Formula 1 below.

[Formula 1]

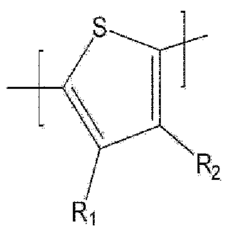

In Formula 1, $R_1$ and $R_2$ may each independently be hydrogen or the long-chain hydrocarbon group. In this case, at least one of $R_1$ and $R_2$ may be the long-chain hydrocarbon group.

In another example, $R_1$ and $R_2$ may be linked to each other to form a divalent functional group of Formula 2 below.

[Formula 2]

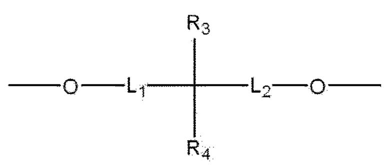

In Formula 2, $L_1$ and $L_2$ may each independently be a single bond, an alkylene group, or an alkylidene group, and $R_3$ and $R_4$may each independently be hydrogen or the long-chain hydrocarbon group, wherein at least one of $R_3$ and $R_4$ may be the long-chain hydrocarbon group.

Here, the specific details of the long-chain hydrocarbon group are as described above.

In this specification, the term alkylene group means a divalent functional group formed by removing hydrogen atoms from two different carbon atoms, respectively, in an alkane, and the term alkylidene group means a divalent functional group formed by removing two hydrogen atoms from one carbon atom in an alkane.

In this specification, unless specifically defined otherwise, the term alkylene group may be an alkylene group with 2 to 20 carbon atoms, 2 to 16 carbon atoms, 2 to 12 carbon atoms, 2 to 8 carbon atoms, or 2 to 4 carbon atoms. The alkylene group may be linear or branched or cyclic, which may also be optionally substituted with one or more substituents.

In this specification, unless specifically defined otherwise, the term alkylidene group may be an alkylidene group with 1 to 20 carbon atoms, 1 to 16 carbon atoms, 1 to 12 carbon atoms, 1 to 8 carbon atoms, or 1 to 4 carbon atoms. The alkylidene group may be linear or branched or cyclic, which may also be optionally substituted with one or more substituents.

Meanwhile, the second thiophene unit may be represented by Formula 3 below.

[Formula 3]

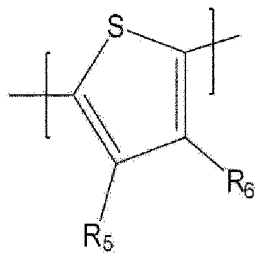

In Formula 3, $R_5$ and $R_6$ may each independently be hydrogen or the short-chain hydrocarbon group, and in this case, at least one of $R_5$ and $R_6$ may be the short-chain hydrocarbon group.

In another example, $R_5$ and $R_6$ may be linked to each other to form a divalent functional group of Formula 4 below.

[Formula 4]

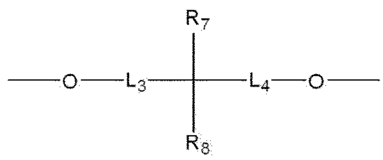

In Formula 4, $L_3$ and $L_4$are each independently a single bond, an alkylene group, or an alkylidene group, and $R_7$ and $R_8$ are each independently hydrogen or the short-chain hydrocarbon group, wherein at least one of $R_7$ and $R_8$ is the short-chain hydrocarbon group.

The specific details of the short-chain hydrocarbon group are as described above.

The specific details of the alkylene group and alkylidene group of Formula 4 are as described in Formula 2 and 3 above.

The conductive polymer may also further comprise a necessary unit together with the unit.

For example, the conductive polymer may further comprise a thiophene unit(hereinafter, may be referred to as a third thiophene unit) having the polar functional group.

In this specification, the term polar functional group is a functional group containing one or two or more polar atoms, for example, oxygen and/or nitrogen. An example of such a functional group includes a carboxyl group, a hydroxy group, an amino group, a cyano group, a nitro group, an ether group, or a functional group of Formula 5 below, but is not limited thereto.

[Formula 5]

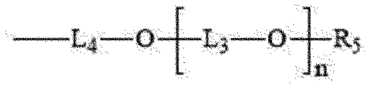

In Formula 5, $L_4$ is a single bond, an alkylene group or an alkylidene group, $L_3$ is an alkylene group or an alkylidene group, $R_5$ is hydrogen or an alkyl group, and n is an arbitrary number.

In Formula 5, the matter that $L_4$is a single bond means a form in which $L_4$ does not exist, and the oxygen atom between $L_4$ and $L_3$ isconnected to the skeleton of a monomer or polymer.

The specific examples of the alkylene group or alkylidene group in Formula 5 are the same as in the case of Formulas 2 to 4.

In one example, the alkyl group of $R_5$ in Formula 5 may be an alkyl group with 1 to 20 carbon atoms, 1 to 16 carbon atoms, 1 to 12 carbon atoms, 1 to 8 carbon atoms, or 1 to 4 carbon atoms, or may be a methyl group or an ethyl group. The alkyl group may be linear, branched, or cyclic, and may be suitably linear or branched.

In Formula 5, the lower limit of n may be 1, 2, 3, or 4 or so, and the upper limit thereof may be 10, 9, 8, 7, 6, 5, 4, or 3 or so. The n may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

Through the application of the polar functional group, the polymer layer comprising the conductive polymermay be bonded to other layers to havean appropriate bonding force, and the desired protective function may be efficiently achieved by uniformly forming such a conductive copolymer layer.

The third thiophene unit can be represented by, for example, Formula 6 below.

[Formula 6]

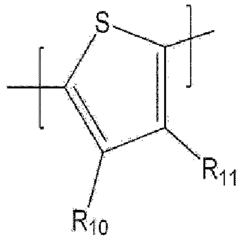

In Formula 6, $R_{10}$ and $R_{11}$may each independently be hydrogen or the polar functional group, and in this case, at least one of $R_{10}$ and $R_{11}$ is the polar functional group.

In another example, $R_{10}$ and $R_{11}$ of Formula 6 may be linked to each other to form a divalent functional group of Formula 7 below.

[Formula 7]

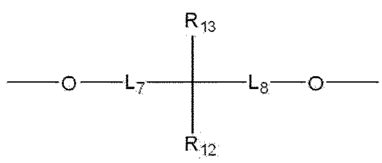

In Formula 7, $L_7$ and $L_8$ are each independently a single bond, an alkylene group, or an alkylidene group, and $R_{12}$ and $R_{13}$ are each independently hydrogen or a polar functional group, wherein at least one of $R_{12}$ and $R_{13}$ is the polar functional group.

The specific details of the polar functional group are as described above.

In addition, here, the specific details of the alkylene group or the alkylidene group are as described in Formulas 2 to 5 above.

When the third thiophene unit is present in the conductive copolymer, the third thiophene unit may be present such that the total mole number of the first and second thiophene units is within a predetermined range per mole of the third

thiophene unit.

For example, the lower limit of the total mole number of the first and second thiophene units per mole of the third thiophene unit may be 1 mol, 2 mol, 3 mol, 4 mol, 5 mol, 6 mol, 8 mol, or 8.5 mol or so, and the upper limit thereof may be 500 mol, 450 mol, 400 mol, 350 mol, 300 mol, 250 mol, 200 mol, 150 mol, 100 mol, 95 mol, 90 mol, 85 mol, 80 mol, 75 mol, 70 mol, 65 mol, 60 mol, 55 mol, 50 mol, 45 mol, 40 mol, 35 mol, 30 mol, 25 mol, 20 mol, 15 mol, 10 mol, 9.5 mol, or 9 mol or so. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

When the first to third thiophene units are present in the conductive polymer, the lower limit of the ratio of the total mole number of the thiophene units (the total mole number of the first to third thiophene units) to the mole number of all monomer units in the conductive polymer may be 50 mol%, 55 mol%, 60 mol%, 65 mol%, 70 mol%, 75 mol%, 80 mol%, 85 mol%, 90 mol%, or 95 mol% or so, and the upper limit thereof may be 100 mol%, 95 mol%, or 90 mol% or so. The ratio may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The conductive polymer may further comprise other polymerization units if it comprises the above-described units in the above ratio.

The polymer layer may comprise the conductive polymer, and accordingly, itmay exhibit the above-described properties.

The polymer layer may also comprise any additional component if it comprises the conductive polymer.

The thickness of the polymer layer may be appropriately controlled depending on the objective. For example, the lower limit of the thickness may be 10 nm, 50 nm, 100 nm, 150 nm, 200 nm, 250 nm, 300 nm, 350 nm, 400 nm, 450 nm, or 500 nm or so, and the upper limit thereof may be 2 μm, 1.5 μm, 1 μm, 950 nm, 900 nm, 850 nm, 800 nm, 750 nm, 700 nm, 650 nm, 600 nm, 550 nm, 500 nm, 450 nm, 400 nm, 350 nm, or 300 nm or so. The thickness may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The thickness may be measured by the method described in "3. Thickness measurement" of Example sections in this specification.

The polymer layer can exhibit appropriate surface characteristics by exhibiting the characteristics as described above, and accordingly, excellent adhesive forcebetween the respective layers in the electrode or electrode current collector can be secured.

For example, the surface energy of the polymer layer in the electrode current collector may be controlled within a predetermined range. For example, the lower limit of the surface energy may be 25 mN/m, 30 mN/m, 35 mN/m, 40 mN/m, or 45 mN/m or so, and the upper limit thereof may be 100 mN/m, 95 mN/m, 90 mN/m, 85 mN/m, 80 mN/m, 75 mN/m, 70 mN/m, 65 mN/m, 60 mN/m, 55 mN/m, 50 mN/m, 45 mN/m, 40 mN/m, or 35 mN/m or so. The surface energy may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits.

The surface energy may be measured in the manner described in "12. Surface energy evaluation method" of Examples sections in this specification.

The present specification also discloses a method for manufacturing the electrode current collector or electrode.

The method for manufacturing an electrode current collector of the present application may comprise a step of forming the polymer layer on the current collector body, and the manufacturing method of the electrode may comprise a step of forming the active material layer on the polymer layer.

The method of forming the polymer layer on the current collector body is not particularly limited. For example, the polymer layer may be formed by a method of diluting the above-described conductive polymer and other additives, if necessary, in an appropriate solvent to prepare a coating liquid, coating the liquid on the current collector, and then drying it.

In another example, the polymer layer may also be formed by directly polymerizing the monomers forming the conductive polymer on the current collector body.

The method for preparing a coating composition for forming the polymer layer, and the coating method thereof, and the like are not particularly limited, and a method in a known coating method may be applied. In addition, the method of polymerizing the conductive polymer is not particularly limited, and a known method may be applied. For example, as a

method for preparing polythiophene, typically, a method using an oxidation polymerization reaction or a method using a radical reaction is known, and such a method may also be applied to the process of forming the conductive polymer in the present application.

A polymer layer may be formed on a current collector body using the prepared coating composition. This process may typically comprise a step of coating the coating composition on a current collector body and a step of heat-treating the coated coating composition. In this process, the characteristics of the polymer layer may also be controlled by the conditions of the heat treatment.

For example, the temperature T of the heat treatment and/or the time H of the heat treatment may be controlled.

For example, the lower limit of the temperature T may be 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, or 140°C or so, and the upper limit thereof may be 300°C, 295°C, 290°C, 285°C, 280°C, 275°C, 270°C, 265°C, 260°C, 255°C, 250°C, 245°C, 240°C, 235°C, 230°C, 225°C, 220°C, 215°C, 210°C, 205°C, 200°C, 195°C, 190°C, 185°C, 180°C, 175°C, 170°C, 165°C, 160°C, 155°C, 150°C, 145°C, 140°C, 135°C, or 130°C or so. The temperature may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

To achieve the objective, the product (T × H) of the heat treatment temperature T and the time H may be adjusted. For example, the lower limit of the product (T × H) of the heat treatment temperature T and the time H may be 0.01°C·hour, 0.05°C·hour, 0.1°C·hour, 0.2°C·hour, 0.3°C·hour, 0.5°C·hour, 1°C·hour, 5°C·hour, 10°C·hour, 15°C·hour, 20°C·hour, 25°C·hour, 30°C·hour, 35°C·hour, 40°C·hour, 45°C·hour, 50°C·hour, 75°C·hour, 100°C·hour, 110°C·hour, 120°C·hour, or 130°C·hour or so, and the upper limit thereof may also be 100000·hour, 95000°C·hour, 90000°C·hour, 85000°C·hour, 80000°C·hour, 75000°C·hour, 70000°C·hour, 65000°C·hour, 60000°C·hour, 55000°C·hour, 50000°C·hour, 45000°C·hour, 40000°C·hour, 35000°C·hour, 30000°C·hour, 25000°C·hour, 20000°C·hour, 15000°C·hour, 10000°C·hour, 9500°C·hour, 9000°C·hour, 8500°C·hour, 8000°C·hour, 7500°C·hour, 7000°C·hour, 6500°C·hour, 6000°C·hour, 5500°C·hour, 5000°C·hour, 4500°C·hour, 4000°C·hour, 3500°C·hour, 3000°C·hour, 2500°C·hour, 2000°C·hour, 1500°C·hour, 1400°C·hour, 1300°C·hour, 1200°C·hour, 1100°C·hour, 1000°C·hour, 900°C·hour, 800°C·hour, 700°C·hour, 600°C·hour, 500°C·hour, 400°C·hour, 300°C·hour, 200°C·hour, 100°C·hour, 90°C·hour, 80°C·hour, 70°C·hour, 60°C·hour, 50°C·hour, 45°C·hour, 40°C·hour, 35°C·hour, 30°C·hour, 25°C·hour, 20°C·hour, 15°C·hour,or 10°C·hour or so. The product (T × H) may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

To more effectively secure the desired properties, the heat treatment may be performed in two steps.

For example, the heat treatment may comprise a step of primarily heat-treating the coating composition at a first temperature T1 for a first time H1 and a step of secondarily heat-treating the coating composition at a second temperature T2 for a second time H2, wherein the temperatures T1 and T2 are different from each other, and/or the times H1 and H2 are different from each other.

For example, the lower limit of the temperature T1 may be 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, or 140°C or so, and the upper limit thereof may be 300°C, 295°C, 290°C, 285°C, 280°C, 275°C, 270°C, 265°C, 260°C, 255°C, 250°C, 245°C, 240°C, 235°C, 230°C, 225°C, 220°C, 215°C, 210°C, 205°C, 200°C, 195°C, 190°C, 185°C, 180°C, 175°C, 170°C, 165°C, 160°C, 155°C, 150°C, 145°C, or 140°C or so. The temperature may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

For example, the lower limit of the product (T1 × H1) of the temperature T1 and the time H1 of the primary heat treatment may be 0.01°C·hour, 0.05°C·hour, 0.1°C·hour, 0.2°C·hour, 0.3°C·hour, 1°C·hour, 2°C·hour, 3°C·hour, 4°C·hour, 5°C·hour, 6°C·hour, 7°C·hour, 8°C·hour, or 9°C·hour or so, and the upper limit thereof may be 1000°C·hour, 900°C·hour, 800°C·hour, 700°C·hour, 600°C·hour, 500°C·hour, 400°C·hour, 300°C·hour, 200°C·hour, 100°C·hour, 90°C·hour, 80°C·hour, 70°C·hour, 60°C·hour, 50°C·hour, 45°C·hour, 40°C·hour, 35°C·hour, 30°C·hour, 25°C·hour, 20°C·hour, 15°C-hour, or 10°C·hour or so. The product (T1 × H1) may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

For example, for example, the lower limit of the heat treatment temperature T2 of the secondary heat treatment may be 50°C, 55°C, 60°C, 65°C, 70°C, 75°C, 80°C, 85°C, 90°C, 95°C, 100°C, 105°C, 110°C, 115°C, 120°C, 125°C, or 130°C or so, and the upper limit thereof may be 300°C, 295°C, 290°C, 285°C, 280°C, 275°C, 270°C, 265°C, 260°C, 255°C, 250°C, 245°C, 240°C, 235°C, 230°C, 225°C, 220°C, 215°C, 210°C, 205°C, 200°C, 195°C, 190°C, 185°C, 180°C, 175°C, 170°C, 165°C, 160°C, 155°C, 150°C, 145°C, 140°C, 135°C, or 130°C or so. The temperature may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. Within this range, the alignment state of the hydrocarbon groupsin the conductive copolymer can be appropriately adjusted, and accordingly, it is possible to secure the desired properties.

The product (T2 × H2) of the secondary heat treatment temperature T2 and the time H2 may be adjusted. For example, the lower limit of the product (T2 × H2) of the heat treatment temperature T and the time H may be 10°C·hour, 15°C·hour, 20°C·hour, 25°C·hour, 30°C·hour, 35°C·hour, 40°C·hour, 45°C·hour, 50°C·hour, 75°C·hour, 100°C·hour, 110°C·hour, 120°C·hour, or 130°C·hour or so, and the upper limit thereof may also be 1000°C·hour, 900°C·hour, 800°C·hour, 700°C·hour, 600°C·hour, 500°C·hour, 400°C·hour, 300°C·hour, 200°C·hour, 180°C·hour, 160°C·hour, 150°C·hour, 145°C·hour, 140°C·hour, 135°C·hour, or 130°C·hour or so. The product (T2 × H2) may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

In the above case, the lower limit of the ratio T1/T2 of the temperature T1 of the primary heat treatment and the temperature T2 of the secondary heat treatment may be 0.1, 0.3, 0.5, 0.7, 0.9, 0.95, 1, 1.01, 1.02, 1.03, 1.04, 1.05, 1.06, or 1.07 or so, and the upper limit thereof may be 10, 9, 8, 7, 6, 5, 4, 3, 2, 1.9, 1.8, 1.7, 1.6, 1.5, 1.4, 1.3, 1.2, or 1.1 or so. The ratio T1/T2 may be within a range of less than or equal to, or less than any one of the above-described upper limits; or within a range of more than or equal to, or more than any one of the above-described lower limits; or within a range between less than or equal to, or less than any one of the above-described upper limits and more than or equal to, or more than any one of the above-described lower limits. Within this range, the alignment state of the hydrocarbon groups in the conductive copolymer can be appropriately adjusted, and accordingly, it is possible to secure the desired properties.

In the above case, the lower limit of the ratio H2/H1 of the time H1 of the primary heat treatment and the time H2 of the secondary heat treatment may be 0.5, 1, 3, 5, 7, 9, 10, 11, 12, 13, 14, 14.5, or 15 or so, and the upper limit thereof may be 100, 95, 90, 85, 80, 75, 70, 65, 60, 55, 50, 45, 40, 35, 30, 25, 20, 19, 18, 17, 16, 15.5, or 15 or so. The ratio H2/H1 may be within a range of less than or equal to, or less than any one of the above-described upper limits; or within a range of more than or equal to, or more than any one of the above-described lower limits; or may also have a range between less than or equal to, or less than any one of the above-described upper limits and more than or equal to, or more than any one of the above-described lower limits. Within this range, the alignment state of the hydrocarbongroupsin the conductive copolymer can be appropriately adjusted, and accordingly, it is possible to secure the desired characteristics.

In the above manufacturing process, a post-process such as an appropriate drying process may also be additionally performed following the coating and/or polymerization process.

Also, the method for forming the active material layer on the polymer layer is not particularly limited. Typically, the active material layer is formed by coating a slurry containing the electrode active material, a binder, and a conductive material on a current collector (on a polymer layer), followed by drying, and then rolling, and this known method can be equally applied to the present application.

In the process as above, the surface characteristics of the polymer layer are controlled, whereby it is possible to secure excellent adhesive force.

For example, the lower limit of the adhesive forceof the active material layer to the polymer layer or the current collector layerin the electrode may be 40 gf/20mm, 50 gf/20mm, 60 gf/20mm, 70 gf/20mm, 80 gf/20mm, 90 gf/20mm, 100 gf/20mm, 110 gf/20mm, 120 gf/20mm, 130 gf/20mm, or 140 gf/20mm or so, and the upper limit thereof may be 500 gf/20mm, 450 gf/20mm, 400 gf/20mm, 350 gf/20mm, 300 gf/20mm, 250 gf/20mm, 200 gf/20mm, 150 gf/20mm, 140 gf/20mm, 130 gf/20mm, 120 gf/20mm, 110 gf/20mm, 100 gf/20mm, 90 gf/20mm, 80 gf/20mm, or 70 gf/20mm or so. The surface energy may be within a range of more than or equal to, or more than any one of the above-described lower limits; or may also have a range between less than or equal to, or less than any one of the above-described upper limits and more than or equal to, or more than any one of the above-described lower limits.

The adhesive force is summarized in "11. Adhesive force evaluation method" of Examples sections in this specification.

Here, the adhesive force of the active material layer to the polymer layer or current collector layermeans an adhesive force that in the adhesive force evaluation method described in Examples, a phenomenon in which all or a part of the active material layer is peeled off from the polymer layer, a phenomenon in which and all or a part of the polymer layer is peeled off from the current collector layer, and other interface destruction phenomena, and the like do not cause (Adhesive force B of the evaluation method of the examples).
The present application also relates to an electrode assembly, or an electrochemical element comprising such an electrode, for example, a secondary battery.
The electrochemical element may comprise the electrode as the positive electrode and/or the negative electrode. If the electrode of the present application is used as the positive electrode and/or the negative electrode, other configurations or manufacturing methods of the electrochemical element are not particularly limited, and known methods can be applied.

**Advantageous Effects**

The present specification discloses an electrode current collector, and a use thereof. The electrode current collector can exhibit excellent electrical characteristics, including low resistance, in a normal state in a secondary battery or the like, and can ensure stability through an increase in resistance in an abnormal state. The present specification also discloses a use of the electrode current collector.

**Description of Drawing**

Figure 1 is a cross-sectional diagram of an exemplary electrode.
Figure 2 is an NMR analysis result for a monomer of Preparation Example 1.

**Mode for Invention**

Hereinafter, current collectors and the like disclosed in the present specification are specifically described through examples and comparative examples, but the scope of the current collectors is not limited by the following examples.

1. **NMR analysis method**

$^1$H-NMR analyses were performed at room temperature (about 25°C) using an NMR spectrometer including a Bruker UltraShield spectrometer (300 MHz) with a 5 mm triple resonance probe. A sample was diluted in a solvent ($CDCl_3$) for NMR measurement to a concentration of about 10 mg/ml or so and used, and the chemical shift was expressed in ppm.

**2. GPC (Gel Permeation Chromatograph)**

Molecular weight characteristics were measured using GPC (Gel permeation chromatography). A sample is placed in a 5 mL vial and diluted with chloroform to a concentration of about 1 mg/mL or so. Thereafter, the standard sample for calibration and the sample to be analyzed were filtered through a syringe filter (pore size: 0.45 μm), and then measured. As the analysis program, Waters'Empower 3 was used, and a weight average molecular weight (Mw) and a number average molecular weight (Mn) were each obtained by comparing the elution time of the sample with the calibration curve, and the molecular weight distribution (PDI) was calculated by the ratio (Mw/Mn).
The measurement conditions of GPC are as follows.

<GPC measurement conditions>

Device: Waters' 2414

Column: using 3 Styragels from Waters

Solvent: THF (tetrahydrofuran)

Column temperature: 35°C

Sample concentration: 1mg/mL, 1μL injection

Standard sample: polystyrene (Mp: 3900000, 723000, 316500, 52200, 31400, 7200, 3940, 485)

**3. Thickness measurement**

The thickness of the polymer layer, and the like was measured by cross-sectioning an electrode or current collector using an ion milling device (Hitachi, IM5000), and then photographing an image with a SEM (Scanning Electron Microscope) (JEOL, JSM-7200F). The conditions for forming the cross section by the ion milling were performedby setting the equipment in cross-section milling mode, the speed (reciprocation/min) of 3, the acceleration voltage of 6.0kV, the discharge voltage of 15 kV, the current of 150 μA, and the time of 4 hours.

**4. Oxidation potential measurement method**

An oxidation potential was measured in the following manner. A polymer layer was formed to a thickness of about 10 μmor so using a conductive copolymer on an aluminum foil (Al Foil) with a thickness of about 15 μm. A polymer (conductive copolymer, etc.) to be measured for the oxidation potential was dispersed in a solvent (chloroform) at a concentration of about 2.0 wt% or so to prepare a coating liquid, and the coating liquid was coated on the aluminum foil (Al Foil) using a bar coating method, and then maintained at 140°C for about 4 minutes or so and maintained at 130°C or so for about 60 minutes or so to form the polymer layer. Then, a separator and a lithium film were laminated on the polymer layer to prepare a laminate in which the aluminum foil/polymer layer/separator/lithium film were laminated, and the laminate was punched into a circle with a diameter of about 1.4 cm. A coin cell was manufactured using the circularly punched laminate and an electrolyte (using Welcos CR2032 coin cell kit). As the separator, the WL20C model from W Scope Korea was used; as the lithium film, a film with a thickness of about 100 μm was used; and as the electrolyte, Enchem's product, a 1M $LiPF_6$ solution (solvent: EC/DMC/EMC =3/4/3 (mass ratio), EC: Ethylene Carbonate, DMC: dimethyl carbonate, EMC: ethylmethyl carbonate) was used.

The oxidation potential of the above coin cell was measured based on lithium and lithium ion ($Li/Li^+$) at 25°C using an electrochemical measuring instrument (potentiostat) (Princeton Applied Research, PARASTAT-MC). The oxidation potential measurement conditions were set to a scan rate of 0.17 mV/sec to 0.5 mV/sec in the range of 1.5V to 5.5V, and the oxidation potential was measured by measuring CV (Cyclic Voltammetry).

**5. DC resistance measurement method**

DC resistance was evaluated using the same coin cell as used in the oxidation potential measurement. A voltage of 4.3eV was applied to the coin cell for 10 minutes at room temperature (25°C), and the DC resistance was measured using a Fluke digital multi-tester (FLUKE-87-5).

**6. Interface resistance (AC impedance resistance)**

Interface resistance was evaluated through EIS (Electrochemical Impedance Spectronization) using the same coin cell as used in the oxidation potential measurement. A voltage of 4.3V was applied to the coin cell for 10 minutes at room temperature (25°C), and the interface resistance obtained in the high frequency region was measured from Nyquist plot obtained by an EIS measurement method at 50,000 Hz to 0.1 Hz. An electrochemical meter (potentiostat) (Princeton Applied Research, PARASTAT-MC) was used as the EIS measurement device.

**7. Measurement of maximum resistance change rate (DC resistance)**

A maximum resistance change rate ΔR1 is determined according to Equation 1 below.

[Equation 1]

$$\Delta R1 = \mathrm{Max}\{(R_{n+5}/R_n)/5\}$$

The above ΔR1 is measured in the following manner.

A coin cell for DC resistance measurement (coin cell applied in the "5. DC resistance measurement method") is

placed in the center of a convection oven (Jeotech, OF3-05W), and the temperature of the oven is set to increase by 5°C per minute from an initial temperature of 25°C to a final temperature of 135°C. The coin cell is connected to a resistance measurement multimeter (Fluke's digital multi-tester (FLUKE-87-5)) outside the oven to enable the resistance measurement. Subsequently, the DC resistance is measured at each temperature in a state where the temperature increases as set. That is, the DC resistance is measured at 25°C, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, 125°C, and 130°C, respectively. Each temperature is maintained for 1 minute according to the set contents, and the DC resistance is measured after 1 minute has elapsed at the relevant temperature. The DC resistance at each temperature becomes $R_n$ of Equation 1 above, and the DC resistance at a temperature that is 5°C higher than the relevant temperature becomes $R_{n+5}$ of Equation 1 above. Among the measured DC resistances, the DC resistances at 25°C, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, and 125°C are each designated as $R_n$, and 21 values of $(R_{n+5}/R_n)/5$ are obtained in the temperature range of 25°C to 130°C, and then the maximum value among them is designated as Max $\{(R_{n+5}/R_n)/5\}$(=ΔR1) of Equation 1 above, and the temperature n°C at $(R_{n+5}/R_n)/5$ of the maximum value is designated as the On-Set temperature.

**8. Measurement of maximum resistance change rate (AC impedance)**

A maximum resistance change rate ΔR2 is determined according to Equation 2 below.

[Equation 2]

$$\Delta R2 = \mathrm{Max}\{(R_{z+5}/R_z)/5\}$$

The ΔR2 is measured in the following manner.

A coin cell for AC impedance resistance measurement (coin cell applied in the "6. Interface resistance (AC impedance resistance)") is placed in the center of a convection oven (Jeotech, OF3-05W), and the temperature of the oven is set to increase by 5°C per minute from an initial temperature of 25°C to a final temperature of 135°C. The coin cell is connected to a resistance measuring device (the measuring device applied in the "6. Interface resistance (AC impedance resistance)") outside the oven to enable the resistance measurement. Subsequently, the AC impedance resistance is measured at each temperature while increasing the temperature as set. That is, AC impedance resistance is measured at 25°C, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, 125°C, and 130°C, respectively. According to the set contents, each temperature is maintained for 1 minute, and the AC impedance resistance is measured at the point when 1 minute has elapsed at the relevant temperature.

The AC impedance resistance at each temperature becomes $R_z$ of Equation 2 above, and the AC impedance resistance at a temperature that is 5°C higher than the relevant temperature becomes $R_{z+5}$ of Equation 2 above. Among the measured AC impedance resistances, the AC impedance resistances at 25°C, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, and 125°C are each designated as $R_z$, and 21 values of $(R_{z+5}/R_z)/5$ are obtained in the temperature range of 25°C to 130°C, and the maximum value among them is designated as Max$\{(R_{z+5}/R_z)/5\}$(=ΔR2) of Equation 2 above, and the temperature z°C at $(R_{z+5}/R_z)/5$ of the maximum value is designated as the On-Set temperature.

The AC impedance resistance was determined as the resistance obtained from the semicircle of the high frequency region in Nyquist plot obtained by applying a voltage of 4.3V for 10 minutes, andusing EIS measurement at 50,000 Hz to 0.1 Hz.

**9. Discharged capacity measurement**

Adischarged capacityfor identifying the results of Equation 3 below was evaluated in the following manner.

[Equation 3]

$$\Delta R3 = 100 \times (C_1 - C_2)/C_1$$

In Equation 3, ΔR3 is the change rate (%) of the discharged capacity, $C_1$ is a discharged capacity at room temperature (about 25°C), and $C_2$ is a discharged capacity after storage at 70°C for 60 hours.

A coin cell (standard capacity: 200 mAh/g) for identifying the discharged capacity of Equation 3 was manufactured in the following manner. The coin cell was manufactured using a CR2032 standard coin cell kit (Welkos CR2032 coin cell kit). Upon manufacturing the coil cell, the electrode prepared in each of Examples or Comparative Examples was

used as a positive electrode, and a lithium film (thickness: 100 μm) was used as a negative electrode. As the electrolyte of a carbonate-based electrolyte, a 1M $LiPF_6$ solution (solvent: EC/DMC/EMC=3/4/3 (mass ratio), EC: ethylene carbonate, DMC: dimethyl carbonate, EMC: ethylmethyl carbonate) was used, and a PE (poly(ethylene)) separator (WL20C model from WScope Korea) was used as a separator.

The coin cell was charged/discharged once at 25°C, and the capacity at 0.2C was set as the discharged capacity $C_1$ in Equation 3 above. The one charge/discharge means that a process of charging it in a CC (constant current)/CV (constant voltage) method at a rate of 0.2C by setting a final charging voltage of 4.5V and a final charging current of 1mA, and discharging it in a CC (constant current) method at a rate of 0.2C by setting a final discharging voltage of 3.0V is repeated once as one cycle. The discharged capacity after one charge/discharge was applied as the discharged capacity ($C_1$) in Equation 3 above.

Immediately after manufacturing the coin cell, the above measurement method was applied to obtain $C_1$, and then after storing the coin cell at 70°C for 60 hours, the discharged capacity was measured using the same method, thereby applying the relevant value as $C_2$ of Equation 3 above.

## 10. Discharged capacity measurement

A discharged capacity for identifying the results of Equation 4 below was evaluated in the following manner.

[Equation 4]

$$\Delta R4 = 100 \times (C_1 - C_3)/C_1$$

In Equation 4, ΔR4 is the change rate (%) of the discharged capacity, $C_1$ is a discharged capacity at room temperature (about 25°C), and $C_3$ is a discharged capacity after storage at 70°C for 60 hours and then storage at 130°C for 10 minutes again.

As a coin cell for identifying the discharged capacity of Equation 4, the same one as that used in the "9. Discharged capacity measurement" was used. $C_1$ of Equation 4 was measured in the same manner as $C_1$ in the "9. Discharged capacity measurement."

Thereafter, after storing the coin cell at 70°C for 60 hours and then storing it again at 130°C for 10 minutes, the discharged capacity $C_3$ was obtained.$C_3$ was obtained in the following manner. As a process of charging it in a CC (constant current)/CV (constant voltage) method at a rate of 0.5C by settinga final charging voltage of 4.5V and a final charging current of 1mA, and discharging it in a CC (constant current) method at a rate of 2C by setting a final discharging voltage of 3.0V again is set to one cycle, the cycle was repeated 30 times, and the discharged capacity after 30 charge/discharge cycles was applied as $C_3$ in Equation 4 above. The 30 charge/discharge cycles were performed at 45°C.

## 11. Adhesive force evaluation method

An adhesive force was measured using a TA analyzer (TAXTplusC) according to a known method for measuring the adhesive force of an active material layer. A specimen was cut to have a width of 20 mm or so to evaluate the adhesive force. As specimens, in the following examples or comparative examples, a laminate (adhesive force A) in which a polymer layer was formed on a current collector and a final electrode (adhesive force B) in which an active material layer was formed on a polymer layer were evaluated. That is, the adhesive force A is the adhesive force of the polymer layer to the current collector, and the adhesive force B is the adhesive force of the active material layer to the polymer layer or the current collector layer. Upon measuring the adhesive force, a peel angle was set to 90 degrees, and a peel rate was set to 5 mm/sec or so. After measurement, the portions where the peaks stabilized were averaged and defined as the adhesive force.

## 12. Surface energy evaluation method

Surface energy was evaluated using Kruss' measuring device (DSA 100), and contact angles were evaluated using water and diiodomethane, and the surface energy was obtained through them.

## Preparation Example 1. Synthesis of monomer (A)

A monomer of Formula A below was synthesized in the following manner.

[Formula A]

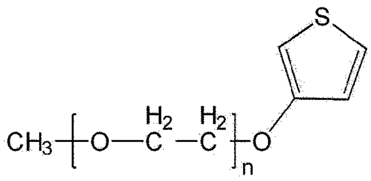

In Formula A, n is 3.

In 150 ml of toluene, 3 g (26.28 mmol, 1 eq) of 3-methoxythiophene and 7.03 g (39.42 mmol, 1.5 eq) of triethylene glycol monomethyl ether were dissolved together with 500 mg(2.63 mmol, 0.1 eq) of p-toluenesulfonic acid (p-TsOH), and mixed. While the mixture was refluxed at 120°C under a nitrogen atmosphere to react, methanol generated by the reaction (transetherification) was removed by 4A type molecular sievesfilled in an extractor (soxhlet extractor). The reactant was cooled to room temperature after refluxing for 24 hours, and then quenched with water, and extracted with ethyl acetate, and then washed with brine, and dried over magnesium sulfate ($MgSO_4$). The solvent was removed using a rotary evaporator, and the residue was purified by column chromatography eluting with methylene chloride/hexane (2:1) to obtain the target compound (monomer (A)). The NMR analysis results for the target compound (monomer (A)) are as shown in Figure 2.

**Example 1.**

**Synthesis of polythiophene (A)**

To a solution in which 3.20 g (19.71 mmol, 3eq) of iron (III) chloride was dissolved in 150ml of methylene chloride,1 g (3.94 mmol, 0.6 eq) of 3-dodecylthiophene, 0.33 g (1.97 mmol, 0.3 eq) of 3-hexylthiophene, and 0.16 g (0.66 mmol, 0.1 eq) of the monomer (A) of Preparation Example 1 were introduced, and polymerized at 30°C for 24 hours to prepare polythiophene (A).

The polymerization solution was placed in an osmosis membrane with an MWCO (molecular weight of cut-off) of 5000, and then immersed in 200ml of an acetonitrile solvent to remove unreacted iron chloride (III), monomers and low molecular weight oligomers. The residue precipitated inside the osmosis membrane was washed with methanol, and dried at 60°C for 12 hours to producepolythiophene (A).

The polythiophene (A) had a weightaverage molecular weight (Mw) and a numberaverage molecular weight (Mn) of 118,000 g/mol and 24,500 g/mol, respectively, and had an oxidation potential of about 3.7 V or so.

**Manufacture of electrode**

An Al foil having a thickness of about 15 μmor so was used as the current collector body. A coating liquid was prepared by dispersing the above-prepared polythiophene (A)in a solvent (chloroform) at a concentration of 2.0 wt% or so. The coating liquid was coated on a current collector body using a bar coating method, maintained at 140°C for about 4 minutes or so, and maintained at 130°C or so for about 60 minutes again to form the polymer layer (thickness: about 300 nm). An electrode was manufactured by forming an active material layer on the polymer layer. A slurry containing lithium cobalt oxide ($LiCoO_2$), a carbon-based conductive material (ECP (Ketjen Black) 0.5%, SFG (Trimrex graphite) 0.4%, DB (Denka Black) 0.4%), PVDF (polyvinylidene fluoride), and NMP (N-methyl-2-pyrrolidone) in a weight ratio of 75:1:1:23 ($LiCoO_2$: conductive material: PVDF: NMP) was applied to a thickness of about 90 μm or so on the polymer layer using a doctor blade, dried at room temperature (about 25°C), and then further dried under vacuum conditions at 120°C, androlledto have a void ratio of about 25% or soto form the active material layer.

**Example 2.**

**Synthesis of polythiophene (B)**

To a solution in which 3.20 g (19.71 mmol, 3eq) of iron (III) chloride was dissolved in 150ml of methylene chloride,0.5 g (1.97 mmol, 0.3 eq) of 3-dodecylthiophene, 0.66 g (3.94 mmol, 0.6 eq) of 3-hexylthiophene, and 0.16 g (0.66 mmol, 0.1 eq) of the monomer (A) of Preparation Example 1 were introduced, and polymerized at 30°C for 24 hours to prepare polythiophene (B).

The polymerization solution was placed in an osmosis membrane with an MWCO (molecular weight of cut-off) of 5000, and then immersed in 200ml of an acetonitrile solvent to remove unreacted iron chloride (III), monomers and low

molecular weight oligomers. The residue precipitated inside the osmosis membrane was washed with methanol, and dried at 60°C for 12 hours to producepolythiophene (B).

The polythiophene (B) had a weightaverage molecular weight (Mw) and a numberaverage molecular weight (Mn) of 105,000 g/mol and 22,300 g/mol, respectively, and had an oxidation potential of about 3.7 V or so.

**Manufacture of electrode**

An electrode was prepared in the same manner as in Example 1, except that the polythiophene (B) was used instead of polythiophene (A). At this time, the thickness of the polymer layer was about 300 nm or so.

**Example 3.**

**Synthesis of polythiophene (C)**

To a solution in which 3.20 g (19.71 mmol, 3eq) of iron (III) chloride was dissolved in 150ml of methylene chloride,0.88 g (3.94 mmol, 0.6 eq) of 3-decylthiophene, 0.33 g (1.97 mmol, 0.3 eq) of 3-hexylthiophene, and 0.16 g (0.66 mmol, 0.1 eq) of the monomer (A) of Preparation Example 1 were introduced, and polymerized at 30°C for 24 hours to prepare polythiophene (C).The polymerization solution was placed in an osmosis membrane with an MWCO (molecular weight of cut-off) of 5000, and then immersed in 200ml of an acetonitrile solvent to remove unreacted iron chloride (III), monomers and low molecular weight oligomers. The residue precipitated inside the osmosis membrane was washed with methanol, and dried at 60°C for 12 hours to producepolythiophene (C).

The polythiophene (C) had a weightaverage molecular weight (Mw) and a numberaverage molecular weight (Mn) of 110,500 g/mol and 23,400 g/mol, respectively, and had an oxidation potential of about 3.7 V or so.

**Manufacture of electrode**

An electrode was prepared in the same manner as in Example 1, except that the polythiophene (C) was used instead of polythiophene (A). At this time, the thickness of the polymer layer was about 300 nm or so.

**Example 4.**

**Synthesis of polythiophene (D)**

To a solution in which 3.20 g (19.71 mmol, 3eq) of iron (III) chloride was dissolved in 150ml of methylene chloride,1 g (3.94 mmol, 0.6 eq) of 3-dodecylthiophene, 0.39 g (1.97 mmol, 0.3 eq) of 3-octylthiophene, and 0.16 g (0.66 mmol, 0.1 eq) of the monomer (A) of Preparation Example 1 were introduced, and polymerized at 30°C for 24 hours to prepare polythiophene (D).The polymerization solution was placed in an osmosis membrane with an MWCO (molecular weight of cut-off) of 5000, and then immersed in 200ml of an acetonitrile solvent to remove unreacted iron chloride (III), monomers and low molecular weight oligomers. The residue precipitated inside the osmosis membrane was washed with methanol, and dried at 60°C for 12 hours to producepolythiophene (D).

The polythiophene (D) had a weightaverage molecular weight (Mw) and a numberaverage molecular weight (Mn) of 136,000 g/mol and 28,000 g/mol, respectively, and had an oxidation potential of about 3.7 V or so.

**Manufacture of electrode**

An electrode was prepared in the same manner as in Example 1, except that the polythiophene (D) was used instead of polythiophene (A). At this time, the thickness of the polymer layer was about 300 nm or so.

**Example 5.**

A coating liquid was prepared by dispersing the polythiophene (A) obtained in Example 1 in a solvent (chloroform) at a concentration of about 2 wt% or so. An electrode was prepared in the same manner as in Example 1, except that the coating liquid was coated on the current collector body using a bar coating method, and maintained at 90°C for 20 minutes or so to form a polymer layer having a thickness of about 300 nm.

**Comparative Example 1.**

## Synthesis of polythiophene (E)

To a solution in which 3.20 g (19.71 mmol, 3eq) of iron (III) chloride was dissolved in 150ml of methylene chloride,1.66 g (6.57 mmol, 1 eq) of 3-dodecylthiophene wasintroduced, and polymerized at 30°C for 24 hours to prepare polythiophene (E).The polymerization solution was placed in an osmosis membrane with an MWCO (molecular weight of cut-off) of 5000, and then immersed in 200ml of an acetonitrile solvent to remove unreacted iron chloride (III), monomers and low molecular weight oligomers. The residue precipitated inside the osmosis membrane was washed with methanol, and dried at 60°C for 12 hours to producepolythiophene (E).

The polythiophene (E) had a weightaverage molecular weight (Mw) and a numberaverage molecular weight (Mn) of 138,000 g/mol and 29,500 g/mol, respectively, and had an oxidation potential of about 3.7 V or so.

## Manufacture of electrode

An electrode was manufactured in the same manner as in Example 1, except that the polythiophene (E) was used instead of polythiophene (A). At this time, the thickness of the polymer layer was about 300 nm or so.

## Comparative Example 2.

## Synthesis of polythiophene (F)

To a solution in which 3.20 g (19.71 mmol, 3eq) of iron (III) chloride was dissolved in 150ml of methylene chloride,1.1 g (6.54 mmol, 1 eq) of 3-hexylthiophene wasintroduced, and polymerized at 25°C for 24 hours to prepare polythiophene (F). The polymerization solution was placed in an osmosis membrane with an MWCO (molecular weight of cut-off) of 5000, and then immersed in 200ml of an acetonitrile solvent to remove unreacted iron chloride (III), monomers and low molecular weight oligomers. The residue precipitated inside the osmosis membrane was washed with methanol, and dried at 60°C for 12 hours to producepolythiophene (F).

The polythiophene (F) had a weightaverage molecular weight (Mw) and a numberaverage molecular weight (Mn) of 94,000 g/mol and 21,500 g/mol, respectively, and had an oxidation potential of about 3.7 V or so.

## Manufacture of electrode

An electrode was fabricated in the same manner as in Example 1, except that the polythiophene (F) was used instead of polythiophene (A). At this time, the thickness of the polymer layer was set to about 300 nm or so.

## Comparative Example 3.

An electrode was manufactured in the same manner as in Example 1, except that the polymer layer was not formed.

The measurement results for the above-manufactured electrodes are summarized in Tables 1 and 2 below. In Tables 1 and 2 below, $C_1$ of Equation 3 and $C_1$ of Equation 4 should theoretically show the same value, but some differences occurred within the error range upon actual experiments. In Tables 1 and 2 below, the surface energy is the surface energy of the polymer layer of each example or comparative example, which is the surface energy of the surface of the polymer layer on which the active material layer is formed.

In Tables 1 and 2, the unit of ΔR1 is Ω·cm/°C, and the unit of ΔR2 is Ω/°C.

[Table 1]

| | Example | | | | |
|---|---|---|---|---|---|
| | 1 | 2 | 3 | 4 | 5 |
| DC resistance (Ω·cm) | 420 | 374 | 390 | 510 | 530 |
| Interface resistance(Q) | 50 | 45 | 48 | 72 | 60 |
| Adhesive force A (gf/20mm) | 64 | 70 | 68 | 67 | 23 |
| Adhesive force B(gf/20mm) | 108 | 118 | 115 | 122 | 42 |
| Surface energy(mN/m) | 38 | 45 | 42 | 35 | 38 |

(continued)

| | | Example | | | | |
|---|---|---|---|---|---|---|
| | | 1 | 2 | 3 | 4 | 5 |
| Equation 1 | ΔR1 | 210 | 120 | 150 | 440 | 55 |
| | On set (°C) | 95 | 100 | 95 | 90 | 85 |
| Equation 2 | ΔR2 | 23.3 | 15.2 | 19.4 | 45.0 | 8.2 |
| | On set (°C) | 95 | 100 | 95 | 90 | 85 |
| Equation 3 | $C_1$ | 199.5 | 198.2 | 199.0 | 198.9 | 199.6 |
| | $C_2$ | 195.6 | 196.4 | 196.2 | 196.0 | 195.7 |
| | ΔR3 | 2.0 | 0.9 | 1.4 | 1.5 | 2.0 |
| Equation 4 | $C_1$ | 199.0 | 199.2 | 198.9 | 199.2 | 199.5 |
| | $C_3$ | 67.0 | 72.3 | 74.0 | 63.4 | 168.2 |
| | ΔR4 | 66.3 | 63.7 | 62.8 | 68.2 | 15.7 |

[Table 2]

| | | Comparative Example | | |
|---|---|---|---|---|
| | | 1 | 2 | 3 |
| DC resistance (Ω·cm) | | 520 | 280 | 5.1 |
| Interface resistance(Q) | | 78 | 39 | 1.9 |
| Adhesive force A (gf/20mm) | | 35 | 44 | - |
| Adhesive force B(gf/20mm) | | 54 | 65 | 130 |
| Surface energy(mN/m) | | 20 | 18 | - |
| Equation 1 | ΔR1 | 480 | 80 | 1.4 |
| | On set (°C) | 75 | 120 | - |
| Equation 2 | ΔR2 | 52.1 | 6 | 2.2 |
| | On set (°C) | 75 | 120 | - |
| Equation 3 | $C_1$ | 199.2 | 198.8 | 199.0 |
| | $C_2$ | 165.3 | 195.7 | 198.0 |
| | ΔR3 | 17.0 | 1.6 | 0.5 |
| Equation 4 | $C_1$ | 199.4 | 197.9 | 199.1 |
| | $C_3$ | 45.0 | 163.8 | 173.7 |
| | ΔR4 | 77.4 | 17.2 | 12.8 |

[Explanation of Reference Numerals]

100: current collector body
200: polymer layer
300: active material layer

## Claims

**1.** A current collector comprising: a current collector body; and a polymer layer formed on the current collector body,

wherein
the polymer layer comprises a copolymer containing a first thiophene unit having a hydrocarbon group with 10 or more carbon atoms and a second thiophene unit having a hydrocarbon group with 9 or less carbon atoms.

2. The current collector according to claim 1, wherein the hydrocarbon group is a linear or branched alkyl group, alkenyl group, or alkynyl group.

3. The current collector according to claim 1, wherein the number of carbon atoms of the hydrocarbon group of the first thiophene unit is in a range of 10 to 20, and the number of carbon atoms of the hydrocarbon group of the second thiophene unit is in a range of 3 to 9.

4. The current collector according to claim 1, wherein the conductive copolymer comprises the thiophene unit having a hydrocarbon group with 10 or more carbon atoms and the thiophene unit having a hydrocarbon group with 9 or less carbon atoms in an amount of 80 mol% or more.

5. The electrode current collector according to claim 1, wherein a ratio M2/M1 of the mole number M2 of the second thiophene unit to the mole number M1 of the first thiophene unit is in a range of 0.01 to 100.

6. The electrode current collector according to claim 1, wherein the first thiophene unit is represented by Formula 1 below, and the second thiophene unit is represented by Formula 3 below:

[Formula 1]

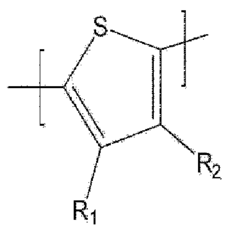

wherein, $R_1$ and $R_2$ are each independently hydrogen or a hydrocarbon group with 10 or more carbon atoms, where at least one of $R_1$ and $R_2$ is the hydrocarbon group with 10 or more carbon atoms, or $R_1$ and $R_2$ are linked to each other to form a divalent functional group of Formula 2 below:

[Formula 2]

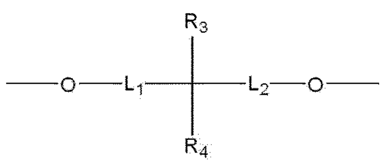

wherein, $L_1$ and $L_2$ are each independently a single bond, an alkylene group, or an alkylidene group, and $R_3$ and $R_4$ are each independently hydrogen or the hydrocarbon group with 10 or more carbon atoms, where at least one of $R_3$ and $R_4$ is the hydrocarbon group with 10 or more carbon atoms:

[Formula 3]

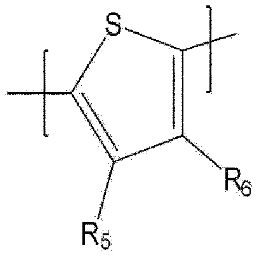

wherein, $R_5$ and $R_6$ are each independently hydrogen or a hydrocarbon group with 9 or less carbon atoms, where at least one of $R_5$ and $R_6$ is the hydrocarbon group with 9 or less carbon atoms, or $R_5$ and $R_6$ are linked to each other to form a divalent functional group of Formula 4 below:

[Formula 4]

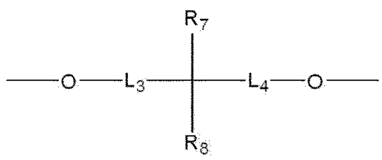

wherein, $L_3$ and $L_4$ are each independently a single bond, an alkylene group, or an alkylidene group, and $R_7$ and $R_8$ are each independently hydrogen or the hydrocarbon group with 9 or less carbon atoms, where at least one of $R_7$ and $R_8$ is the hydrocarbon group with 9 or less carbon atoms.

**7.** The current collector according to claim 1, wherein the copolymer further comprises a third thiophene unit having a polar functional group.

**8.** The current collector according to claim 7, wherein the polar functional group is a carboxyl group, a hydroxy group, an amino group, a cyano group, a nitro group, an ether group, or a functional group of Formula 5 below:

[Formula 5]

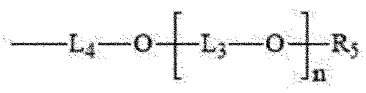

wherein, $L_4$ is a single bond, an alkylene group, or an alkylidene group, $L_3$ is an alkylene group or an alkylidene group, $R_5$ is hydrogen or an alkyl group, and n is a number in a range of 1 to 10.

**9.** The electrode current collector according to claim 7, wherein the third thiophene unit is represented by Formula 6 below:

[Formula 6]

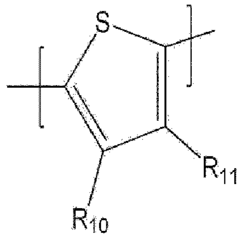

wherein, $R_{10}$ and $R_{11}$ are each independently hydrogen or a polar functional group, where at least one of $R_{10}$ and $R_{11}$ is the polar functional group, or $R_{10}$ and $R_{11}$ are linked to each other to form a divalent functional group of Formula 7 below:

[Formula 7]

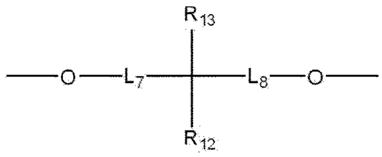

wherein, $L_7$ and $L_8$ are each independently a single bond, an alkylene group, or an alkylidene group, and $R_{12}$ and $R_{13}$ are each independently hydrogen or the polar functional group, where at least one of $R_{12}$ and $R_{13}$ is the polar functional group.

**10.** The electrode current collector according to claim 7, wherein the third thiophene unit in the conductive copolymer is included in an amount such that 1 mol to 500 mol of the first and second thiophene units exist per mole of the third thiophene unit.

**11.** The electrode current collector according to claim 1, whereinΔR1 of Equation 1 below is 100 Ω·cm/°C or more:

[Equation 1]

$$\Delta R1 = Max\{(R_{n+5}/R_n)/5\}$$

wherein, $R_n$ is the DC resistance at any temperature n°C within a range of 25°C to 135°C, and $R_{n+5}$ is the DC resistance at a temperature((n+5)°C) 5°C higher than the temperature n°C,and Max{($R_{n+5}/R_n$)/5} is the maximum value among the ($R_{n+5}/R_n$)/5 values confirmed within the temperature range of 25°C to 135°C.

**12.** The electrode current collector according to claim 11, wherein the temperature of $R_n$ at which ΔR1 is confirmed is more than 80°C.

**13.** The electrode current collector according to claim 1, whereinΔR2 of Equation 2 below is 10 Ω/°C or more:

[Equation 2]

$$\Delta R2 = Max\{(R_{z+5}/R_z)/5\}$$

wherein, $R_z$ is the AC impedance resistance at any temperature n°C within a range of 25°C to 135°C, and $R_{z+5}$ is the AC impedance resistance at a temperature ((n+5)°C) 5°C higher than the temperature n°C, and Max{($R_{z+5}/R_z$)/5} is the maximum value among the ($R_{z+5}/R_z$)/5 values confirmed within the temperature range of 25°C to 135°C.

**14.** The electrode current collector according to claim 13, wherein the temperature of $R_z$ at which ΔR2 is confirmed is 80°C or more.

**15.** The electrode current collector according to claim 1, wherein the absolute value of ΔR3 ofEquation 3 below is less than 10%:

[Equation 3]

$$\Delta R3 = 100 \times (C_1 - C_2)/C_1$$

wherein, $C_1$ is the discharged capacity at 25°C, and $C_2$ is the discharged capacity after being maintained at 70°C for 60 hours.

**16.** The electrode current collector according to claim 1, wherein the absolute value of $\Delta R4$ of Equation 4 below is 15% or more:

[Equation 4]

$$\Delta R4 = 100 \times (C_1 - C_3)/C_1$$

wherein, $C_1$ is the discharged capacity at 25°C, and $C_3$ is the discharged capacity after being maintained at 130°C for 10 minutes.

**17.** The electrode current collector according to claim 1, wherein the polymer layer has a thickness in a range of 10nm to 2μm.

**18.** An electrode comprising:

the current collector according to any one of claims 1 to 17; and
an active material layer formed on the polymer layer of the current collector.

**19.** An electrode assembly comprising the electrode of claim 18.

**20.** A secondary battery comprising the electrode of claim 18.

[Figure 1]

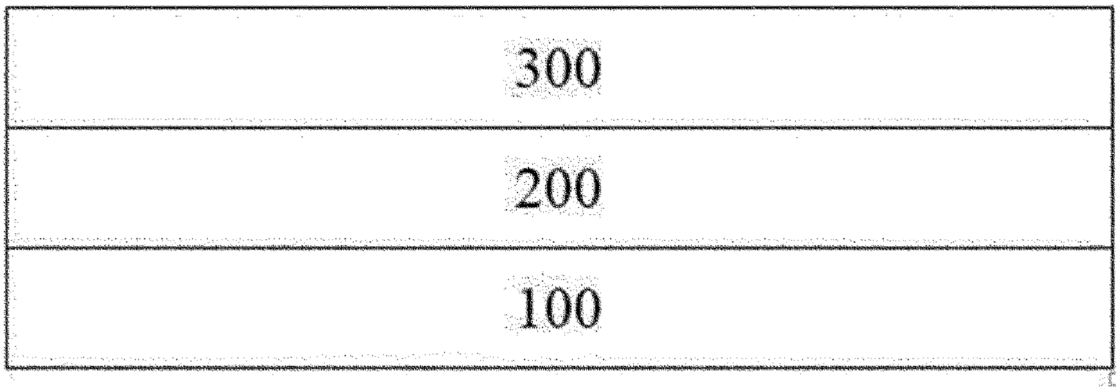


[Figure 2]

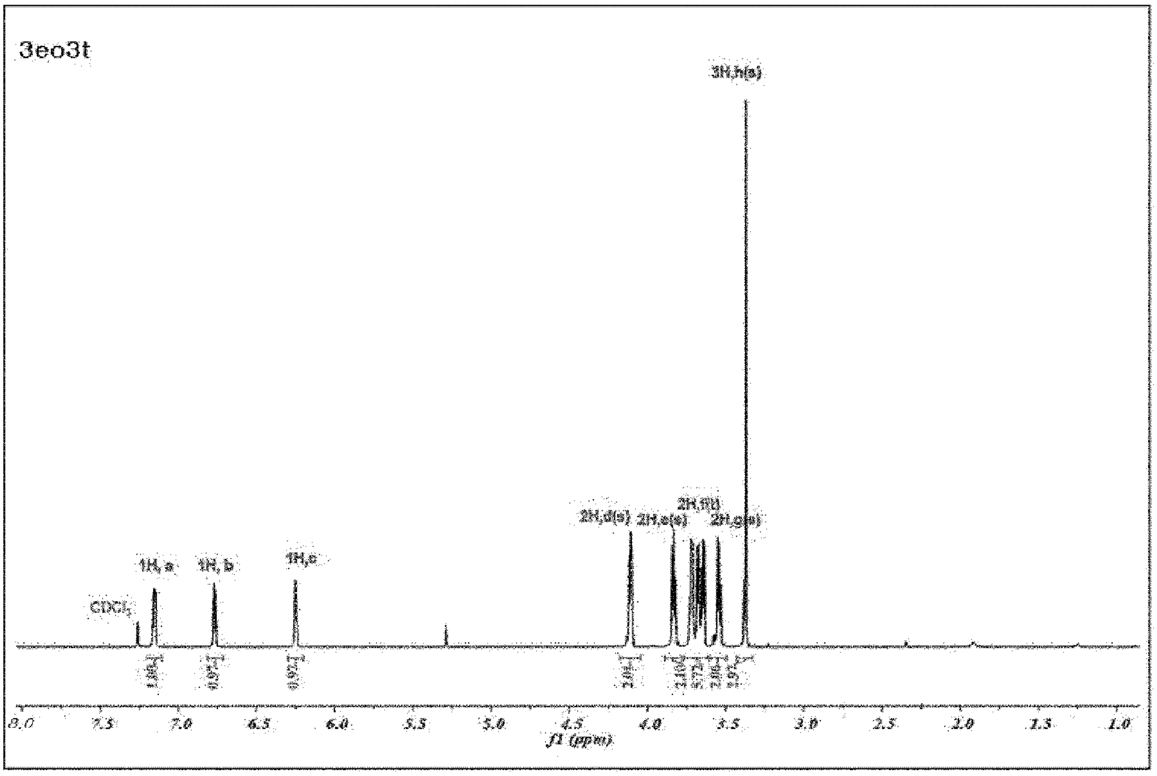

**INTERNATIONAL SEARCH REPORT**

International application No. **PCT/KR2023/016283**

**A. CLASSIFICATION OF SUBJECT MATTER**

**H01M 4/66**(2006.01)i; **H01M 4/13**(2010.01)i; **C08L 65/00**(2006.01)i; **C08G 61/12**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 4/66(2006.01); H01M 10/052(2010.01); H01M 10/42(2006.01); H01M 2/26(2006.01); H01M 4/13(2010.01); H01M 4/134(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 집전체(collector), 전도성 고분자(conductive polymer), 티오펜(thiophene), 탄화수소기(hydrocarbon group), 극성 관능기(polar functional group)

**C. DOCUMENTS CONSIDERED TO BE RELEVANT**

| Category* | Citation of document, with indication, where appropriate, of the relevant passages | Relevant to claim No. |
|---|---|---|
| Y | US 2021-0351413 A1 (GLOBAL GRAPHENE GROUP, INC.) 11 November 2021 (2021-11-11)<br>See claims 1-14; and paragraphs [0092] and [0093]. | 1-20 |
| Y | LI, H. et al. Building a thermal shutdown cathode for Li-Ion batteries using temperature-responsive poly(3-dodecylthiophene). Energy technology. 2020, vol. 8, thesis no.: 2000365, inner pp. 1-9.<br>See inner pages 1, 7 and 8; and figure 6. | 1-20 |
| Y | KR 10-2022-0043773 A (LG ENERGY SOLUTION, LTD.) 05 April 2022 (2022-04-05)<br>See claims 14-18; and paragraphs [0033]-[0037], [0126], [0127], [0135] and [0136]. | 7-10 |
| Y | ZHANG, H. et al. Poly(3-butylthiophene)-based positive-temperature-coefficient electrodes for safer lithium-ion batteries. Electrochimica acta. 2016, vol. 187, pp. 173-178.<br>See abstract; and page 174. | 1-20 |
| Y | DE 102015206146 A1 (ROBERT BOSCH GMBH) 13 October 2016 (2016-10-13)<br>See claims 1-15. | 1-20 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 February 2024** | **02 February 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

**INTERNATIONAL SEARCH REPORT**

International application No.
**PCT/KR2023/016283**

**C. DOCUMENTS CONSIDERED TO BE RELEVANT**

| Category* | Citation of document, with indication, where appropriate, of the relevant passages | Relevant to claim No. |
|---|---|---|
| PX | KR 10-2023-0037451 A (LG ENERGY SOLUTION, LTD.) 16 March 2023 (2023-03-16) See claims 1-9; and paragraphs [0167]-[0170]. | 1-6,11-20 |

Form PCT/ISA/210 (second sheet) (July 2022)

**INTERNATIONAL SEARCH REPORT**
**Information on patent family members**

International application No.
**PCT/KR2023/016283**

| Patent document cited in search report | Publication date (day/month/year) | Patent family member(s) | Publication date (day/month/year) |
|---|---|---|---|
| US 2021-0351413 A1 | 11 November 2021 | None | |
| KR 10-2022-0043773 A | 05 April 2022 | CN 116420247 A | 11 July 2023 |
| | | EP 4203094 A1 | 28 June 2023 |
| | | US 2023-0335709 A1 | 19 October 2023 |
| | | WO 2022-071704 A1 | 07 April 2022 |
| DE 102015206146 A1 | 13 October 2016 | None | |
| KR 10-2023-0037451 A | 16 March 2023 | WO 2023-038474 A1 | 16 March 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220135124